## Europäisches Patentamt
## European Patent Office
## Office européen des brevets

(11) Veröffentlichungsnummer: **0 247 462**
**B1**

(12) **EUROPÄISCHE PATENTSCHRIFT**

(45) Veröffentlichungstag der Patentschrift:
08.08.90

(51) Int. Cl.⁵: **A22C 11/02**

(21) Anmeldenummer: **87107067.8**

(22) Anmeldetag: **15.05.87**

(54) **Darmbremse.**

(30) Priorität: **21.05.86 DE 3617030**

(43) Veröffentlichungstag der Anmeldung:
**02.12.87 Patentblatt 87/49**

(45) Bekanntmachung des Hinweises auf die Patenterteilung:
**08.08.90 Patentblatt 90/32**

(84) Benannte Vertragsstaaten:
**AT CH ES FR GB LI**

(56) Entgegenhaltungen:
**DE-A- 2 065 132**
**DE-A- 2 137 449**
**DE-A- 2 224 876**
**DE-A- 2 254 943**
**DE-B- 1 191 711**
**FR-A- 2 089 747**
**FR-A- 2 253 459**
**US-A- 3 872 543**

(73) Patentinhaber: **Albert Handtmann Maschinenfabrik GmbH & Co. KG, Birkenallee 25-29, D-7950 Biberach a.d. Riss 1(DE)**

(72) Erfinder: **Ostwald, Manfred, Gartenstrasse 9, D-7950 Biberach/Riss(DE)**

(74) Vertreter: **Patentanwälte Grünecker, Kinkeldey, Stockmair & Partner, Maximilianstrasse 58, D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Abdrehvorrichtung für eine Maschine zum Füllen und Abdrehen von Würsten, mit einer Darmbremse, die am freien Ende der Abdrehtülle angeordnet ist und beim Abdrehen im Drehsinn der Abdrehtülle angetrieben wird, mit einem konzentrisch zur Abdrehtülle angeordneten Bremsring, einer mit einer Durchgangsbohrung versehenen Gewindehülse und einer Andrückschraube, wobei der Bremsring elastisch ist, eine konische Außenfläche und einer hintere Anpreßfläche aufweist und in der Gewindehülse angeordnet ist und wobei die Andrückschraube in die Gewindehülse einschraubbar ist und eine vordere Anpreßfläche aufweist, mit der sie auf die hintere Anpreßfläche des Bremsrings wirkt und diesen dadurch mit seiner konischen Außenfläche gegen einen auf der inneren Vorderseite der Gewindehülse ausgebildeten Anschlag derart beaufschlagt, daß dieser einen bestimmten Radialabstand zur Abdrehtülle einnimmt.

Abdrehvorrichtungen dieser Art sind bekannt, siehe FR-A 2 253 459. Sie wirken am freien, vorderen Ende einer Abdrehtülle bei einer Maschine zum Füllen und Abdrehen von Würsten.Der Darmbremse kommt dabei die Aufgabe zu, eine auf die Abdrehtülle aufgeschobene Darmraupe beim Füllvorgang so zurückzuhalten bzw. zu spannen, daß die Wurst mit der gewünschten Prallheit gefüllt wird. Die Darmbremse wird im allgemeinen über ein eigenes Getriebe, welches in einer Haltevorrichtung untergebracht ist, in Drehrichtung der Abdrehtülle beim Abdrehvorgang mit angetrieben und sorgt dabei für eine sichere Mitnahme des Darmes beim Abdrehvorgang. Der gefüllte Darm führt wegen seiner Trägheit diese Bewegung nicht mit aus, so daß sich dann in bekannter Weise die Einschnürungen des abgefüllten Darmes und damit einzelne, portionierte Würste ergeben.

Außer diesen Aufgaben kommt der Darmbremse schließlich noch die weitere Aufgabe zu, das Rückströmen des Wurstbrätes über den Außenmantel der Abdrehtülle zu verhindern.

Bei einer bekannten Abdrehvorrichtung dieser Art, wie sie bisher in Wurstabfüll- und Abdrehmaschinen der Anmelderin eingebaut war, ist die Rückhalte- bzw. Bremskraft des Bremsrings der Darmbremse einstellbar, um für unterschiedliche Darmsorten, wie Naturdarm, Kollagendarm und Kunstdarm die jeweils geeigneten Bremskräfte einstellen zu können. Hierzu ist der Bremsring in einer Gewinderhülse angeordnet und wird von hinten mit Hilfe einer Andrückschraube gegen eine konische, innere Vorderfläche der Gewindehülse geschraubt. Je nachdem wie weit die Andrückschraube in die Gewindehülse hineingeschraubt wird, preßt sie mehr oder weniger stark den Bremsring mit einer konischen Außenfläche gegen die konische Innenfläche der Gewindehülse. Aufgrund dieser Anpreßkraft verformt sich der Bremsring und kann auch etwas entlang der konischen Innenfläche der Gewindehülse gleiten. Als Ergebnis davon ändert sich daher der Radialabstand zwischen seiner Bremsfläche und der Abdrehtülle. Dadurch lassen sich dann unterschiedliche Bremskräfte einstellen.

Weil aber der Bremsring über die gesamte, konische Innenfläche der Gewindehülse mit seiner entsprechend geneigten Außenfläche an dieser Innenfläche anliegt, sind relativ hohe Reibungskräfte zu überwinden, wenn die Lage des Bremsrings, der über die Andrückschraube axial beaufschlagt wird, verändert werden soll. Dies zieht relativ hohe Verstellmomente der Andrückschraube nach sich, so daß die Einstellung der unterschiedlichen Bremskräfte relativ große Kräfte erfordert, die ohne geeignetes Werkzeug nicht aufzubringen sind.

Weiterhin hat sich herausgestellt, daß die Bremskraft mit zunehmendem Verstellweg im Sinne einer Erhöhung der Bremskraft nicht linear, sondern nahezu quadratisch ansteigt. Insbesondere gegen Ende des Verstellweges ist ein plötzlicher starker Anstieg der Bremskraft zu beobachten, was ein feines und exaktes Einstellen unterschiedlicher Bremskräfte nicht mehr möglich macht.

Schließlich führen bei der bekannten Abdrehvorrichtung Schwankungen in der Dicke des Darmes zu relativ starken Kraftschwankungen. Dies ist insbesondere deshalb nachteilig, weil für jeden Darm eine bestimmte Bremskraft nicht überschritten werden sollte. Wird sie gerade aufgrund von Schwankungen im Darm dennoch überschritten, kann dies zu Darmplatzer führen, was schon wegen der dadurch notwendigen Unterbrechung im Produktionsfluß sehr störend ist.

Der Erfindung liegt daher die Aufgabe zugrunde, eine Abdrehvorrichtung der eingangs genannten Art dahingehend zu verbessern, daß sich die Bremskräfte genau und sicher und ohne großen Kraftaufwand beim Verstellen der Andrückschraube einstellen lassen.

Gelöst wird diese Aufgabe bei einer Abdrehvorrichtung der eingangs genannten Art dadurch, daß der Öffnungswinkel der konischen Außenfläche des Bremsrings kleiner als der Öffnungswinkel der inneren Vorderseite der Gewindehülse ist, so daß der Anschlag allein von der die Durchgangsbohrung der Gewindehülse begrenzenden Randkante gebildet wird und daß die hintere Anpreßfläche des Bremsrings und die vordere Anpreßfläche der Andrückschraube von Konusflächen gebildet werden, die derart gerichtet sind, daß die Kraftübertragungsrichtung im wesentlichen in Verlaufsrichtung der konischen Außenfläche des Bremsringes weist.

Durch die alleinige Abstützung des Bremsrings an der Randkante der Durchgangsbohrung der Gewindehülse wird erreicht, daß die konische Außenfläche des Bremsrings die Gewindehülse nur noch über einen sehr kleinen Bereich, nämlich im Bereich der Randkante der Durchgangsbohrung in der Gewindehülse berührt. Die Reibungskräfte, die beim Verstellen zwischen Gewindehülse und Bremsring dadurch wirken, sind gering, so daß dadurch sehr kleine Verstellkräfte beim Einstellen der Bremskraft erreicht werden können. Durch die relativ geringe Berührungsfläche zwischen Gewindehülse und Bremsring wird darüber hinaus erreicht, daß der Bremsring bei Darmunebenheiten einfache Ausweichbewegungen ausführen kann, so daß insbesondere Darmplatzer bei Naturdarm sich durch diese Maßnahme bis auf zu 1/3 der bei einer bekannten Darmbremse vorkommenden Anzahl reduzieren lassen. Dadurch, daß beim Verstellen nur kleine Kräfte überwunden werden müssen, läßt sich der Bremsring darüber hinaus gegenüber der Gewindehülse sehr fein einstellen und es hat sich auch gezeigt, daß insbesondere beim Einstellen von großen Bremskräften kein übermäßig rascher Anstieg der Bremskraft abhängig vom Einschraubweg der Andrückschraube beobachtet wird. Mit diesem Merkmal wirkt die Randkante außerdem nicht nur als Führung bei der Gleitbewegung des Bremsrings, sondern auch als Drehpunkt. Da die Kraft über die Anpreßfläche und damit in relativ großem Abstand zu diesem Drehpunkt eingeleitet wird, führt das Einschrauben der Gewindehülse auch zu einer gewissen Verbiegung des Bremsrings um die Randkante herum, so daß dadurch der kurze, zum Abdrehtüllenende hinweisende Abschnitt des Bremsrings durch das Einleiten der Anpreßkraft in der Art eines Hebels mit der Randkante als Drehpunkt in Richtung auf die Abdrehtülle hin beaufschlagt wird. Der Bremsring verschiebt sich daher beim Einleiten der Anpreßkraft nicht nur bezüglich der Randkante, sondern erfährt dadurch in seinem vorderen Bereich auch ein gewisses Drehmoment um die Randkante in Richtung auf die Abdrehtülle hin. Dies unterstützt weiterhin die Möglichkeit, über einen weiteren Bereich bis hin zu großen Bremskräften eine feine Bremskrafteinstellung verwirklichen zu können. Auch führt dies dazu, daß der Bremsring bei hohen Anpreßkräften nicht mehr nach vorn aus der Öffnung der Gewindehülse herausgedrückt wird als dies bei kleinen Anpreßkräften der Fall ist. Die beschriebene Verbiegung des Bremsrings um die Randkante herum kann jedoch aufgrund des weiteren kennzeichnenden Merkmals, gemäß dem die hintere Anpreßfläche des Bremsrings und die vordere Anpreßfläche der Andrückschraube von Konusflächen gebildet werden, die derart gerichtet sind, daß die Kraftübertragungsrichtung im wesentlichen in Verlaufsrichtung der konischen Außenfläche des Bremsrings weist, nicht soweit gehen, daß ein Ausknicken des Bremsrings stattfinden kann. Vielmehr erlaubt diese Maßnahme gleichzeitig eine hohe Krafteinleitung, ohne daß es zu einem Ausknicken kommen kann.

Das geschilderte Verhalten des Bremsrings läßt sich sowohl mit einem Bremsring aus Gummimaterial erzielen, als auch beispielsweise durch einen Bremsring, der auf der Seite größeren Durchmessers, also der zur Anpreßfläche hinweisenden Seite, ein fester Ring, beispielsweise ein Blechring ist, und von dem sich dann eine Konusfläche mit Längsschlitzen zum kleinen Durchmesser der Konusfläche hin erstreckt, so daß der Bremsring dann in der Art einer Zange ausgebildet ist. Zum Schutz des Darmes müßte dann bei dieser Lösung im Bereich der Kanten des Bremsrings die zur Abdrehtülle weisen, d.h. auf der Gewindehülseseite des Bremsrings, eine Gummiummantelung angeordnet, beispielsweise aufvulkanisiert sein.

Aus der DE-AS 22 24 876 ist es im Stand der Technik bereits bekannt, bei einer Vorrichtung zum Abbremsen von Verpackungsschläuchen, die von einem Füllrohr ablaufen, den Bremsring im wesentlichen allein an der Randkante der Durchgangsbohrung in der Gewindehülse abzustützen. Die Bremswirkung wird dabei durch einen Keileffekt erzielt. Die Kraft wird auf den Bremsring parallel zum Füllrohr eingeleitet. Das Füllrohr ist keine Abdrehtülle sondern ein feststehendes Füllrohr.

Auch aus dem französischen Patent 20 89 747 ist es für ein dort beschriebenes Ausführungsbeispiel bekannt, den Bremsring nur an der Randkante der Durchgangsbohrung einer Gewindehülse abzustützen. Die Erfindung unterscheidet sich von dieser Druckschrift durch die schräge Anstellung der Krafteinleitungsflächen zwischen Bremsring und Andrückschraube und außerdem dadurch, daß die Erfindung sich auf Abdrehvorrichtungen mit Abdrehtüllen bezieht, während in diesem französischen Patent ebenso wie in der zitierten DE-AS mit feststehenden Füllrohren abgefüllt wird.

Eine weitere Ausgestaltung der Erfindung sieht vor, daß die Länge der Konusfläche des Bremsrings kleiner als die Länge der Konusfläche der Andrückschraube ist. Beim Einschrauben der Andrückschraube ist dadurch in jeder Stellung eine im wesentlichen über die gesamte Konusfläche des Bremsrings existierende Andrückfläche verwirklicht, so daß die Kräfte immer vollflächig über die Konusfläche des Bremsrings eingeleitet werden können.

Eine weitere Ausgestaltung der Erfindung sieht vor, daß die innenseitige Randkante der Durchgangsöffnung abgerundet ist. Dadurch lassen sich die Reibungskräfte, die zwischen Bremsring und der Randkante wirken, weiter herabsetzen und insbesondere wird dadurch eine Beschädigung des Bremsrings vermieden, weil keine scharfen Kanten vorhanden sind, an denen Abnutzungserscheinungen beobachtet werden könnten.

Eine weitere sehr vorteilhafte Ausgestaltung der Erfindung sieht vor, daß an der axial gerichteten Außenfläche der Andrückschraube eine umlaufende Ringnut ausgebildet ist, in der ein mit der axial verlaufenden, hinteren Innenfläche der Gewindehülse zusammenwirkender O-Ring aufgenommen ist. Der O-Ring dient dem Zweck, auch bei kleineren Reaktionskräften, eine sichere Selbsthemmung der Andrückschraube bezüglich der Gewindehülse sicherzustellen. Dies ist insbesondere wichtig, damit hohe Start- und Stopmomente beim Abdrehen nicht zu einem Verdrehen der Andrückschraube gegenüber der Gewindehülse und damit zu einem Verstellen des Bremsrings führen. Die Anordnung des O-Rings führt zwar gegenüber einer Lösung ohne O-Ring zu einem erhöhten Verstellmoment, das erzielbare Verstellmoment bleibt aber insgesamt dennoch wesentlich geringer als bei der im Stand der Technik bekannten, oben beschriebenen Lösung.

In einer konkreten Ausgestaltung der Erfindung ist weiterhin vorgesehen, daß der Öffnungswinkel der konischen Außenfläche des Bremsrings ca. 100° beträgt. Wenn dann die innere Vorderseite der Gewindehülse von einer Innenkonusfläche gebildet wird, deren Öffnungswinkel ca. 150° beträgt, liegen die Öffnungswinkel des Außenkonus am Bremsring und des Innenkonus an der Gewindehülse so weit auseinander, daß eine alleinige Berührung zwischen Bremsring und Gewindehülse entlang der Randkante, die die Durchgangsöffnung der Gewindehülse begrenzt, gewährleistet ist.

Im folgenden wird ein Ausführungsbeispiel anhand der Zeichnung erläutert und beschrieben.

Figur 1 zeigt eine perspektivische, schematische Ansicht einer Wurstabfüllmaschine mit Darmbremse zur Erläuterung der allgemeinen Zusammenhänge und

Figur 2 zeigt einen Querschnitt durch eine erfindungsgemäße Darmbremse.

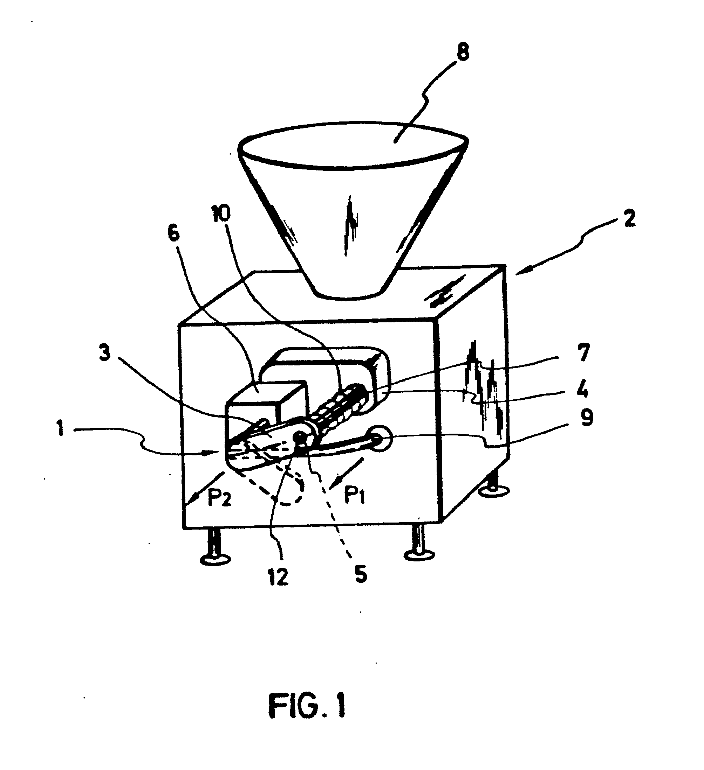

Anhand von Figur 1 sollen zunächst kurz die Zusammenhänge und die Funktion einer Abdrehvorrichtung erläutert werden. In Figur 1 ist eine insgesamt mit 2 bezeichnete Wurstabfüll- und Abdrehmaschine dargestellt. Die Maschine wird über einen Fülltrichter 8 mit Wurstbrät beschickt, welches dann mit Hilfe nicht näher dargestellter Einrichtungen zum Portionieren bzw. Abfüllen in Wurstdärme durch die Abdrehtülle 7 ausgestoßen wird. Zum Abfüllen in Därme wird eine Darmraupe 10 vom vorderen freien Ende 5 der Abdrehtülle 7 her auf die Abdrehtülle aufgezogen. Nach dem Ausstoßen einer eingestellten Portion wird die Abdrehtülle 7 durch ein in dem Gehäuse 4 angeordnetes Abdrehgetriebe um die eigene Achse gedreht, um eine Einschnürung der abgefüllten Portion zu erreichen. Um den Füll- und Abdrehvorgang vollautomatisch ablaufen zu lassen, ist an der Maschine eine im Ganzen mit 1 bezeichnete Abdrehvorrichtung angeordnet. Die Abdrehvorrichtung weist ein Bremsringgehäuse 3 auf, das in der in Figur 1 durchgezogen dargestellten Arbeitslage das freie Ende 5 der Abdrehtülle in einer Durchgangsöffnung 12 umschließt. In der Durchgangsöffnung 12 wirkt die Darmbremse, die beim Füllvorgang die Darmraupe 10 in ihrer Abzugsbewegung etwas bremst und so für die notwendige Spannung des zu füllenden Darmes sorgt. Damit die Abdrehtülle 7 beim Abdrehvorgang nicht durchrutscht, ohne den Darm mitzunehmen, wird die Darmbremse durch das Bremsringgehäuse 3 und die Haltevorrichtung hindurch über ein Getriebe angetrieben und zwar mit der Drehgeschwindigkeit und im Drehsinn der Abdrehtülle 7.

Um neue Darmraupen aufziehen zu können, ist das Bremsringgehäuse 3 mittels eines Hebels 9 in hier nicht näher zu erläuternder Weise so abschwenkbar, daß das freie Ende der Abdrehtülle 7 zugänglich wird, um so neue Darmraupen ohne Behinderung aufziehen zu können.

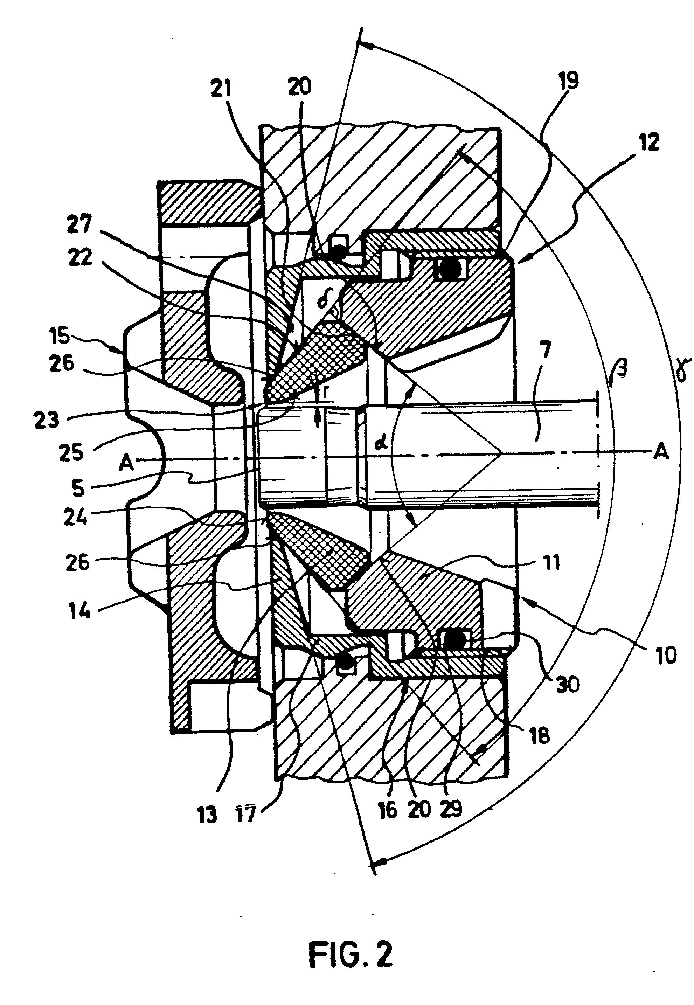

In Figur 2 ist nun die Darmbremse, die in der Durchgangsöffnung 12 wirkt und im Bremsringgehäuse 3 untergebracht ist, im einzelnen in einer Schnittdarstellung gezeigt.

Die Darmbremse, die insgesamt mit 10 bezeichnet ist, besteht im wesentlichen aus der Andrückschraube 11, dem Bremsring 13 und der Gewindehülse 14. Diese Bauteile sind konzentrisch zur Achse A-A der Abdrehtülle 7 um diese herum im Bereich der Durchgangsöffnung 12 des Bremsringgehäuses 3 angeordnet und werden über das Bremsringgetriebe angetrieben. Der Haltestern 15 wird nicht angetrieben, sondern verbleibt während des Abdrehvorganges ruhig und trägt damit dazu bei, daß ein bereits abgefüllter Darm beim Abdrehvorgang nicht mit abgedreht wird. Der Antrieb der Darmbremse 10 erfolgt in ansich bekannter Weise über Zahnräder durch das Bremsringgehäuse 3 hindurch, was hier nicht näher erläutert werden muß.

Wie zu erkennen ist, besitzt die Gewindehülse 14 einen rückwärtigen Bereich 16, dessen Durchmesser größer als im vorderen Bereich 17 der Gewindehülse gehalten ist. In diesem Bereich ist ein Innengewinde 18 ausgebildet, welches mit einem Außengewinde 19 der Andrückschraube 11 zusammenwirkt. Somit kann also vom rückwärtigen Bereich der Gewindehülse her die Andrückschraube 11 mehr oder weniger weit in die Gewindehülse eingeschraubt werden. Auf ihrer zur vorderen freien Ende 5 der Abdrehtülle hinweisenden Seite weist die Andrückschraube eine vordere Anpreßfläche 20 auf, die als Innenkonus mit einem Öffnungswinkel $\alpha$ von 80° ausgebildet ist.

Mit dieser vorderen Anpreßfläche 20 drückt die Andrückschraube auf eine als Außenkonus ausgebildete hintere Anpreßfläche 21 des Bremsrings 13. Wie zu erkennen ist, ist die Länge der Anpreßfläche 20 an der Andrückschraube größer als diejenige der Anpreßfläche 21 des Bremsrings.

Die Anpreßflächen 20 und 21 bilden zur konischen Außenfläche 22 des Bremsrings einen Winkel $\delta$ von 90°. Dies hat zur Folge, daß die Kraft, die bei einer Axialverschiebung durch Einschrauben der Andrückschraube in die Gewindehülse auf den Bremsring übertragen wird, die in der Neigungsrichtung der konischen Außenfläche 22 zur Achse A-A der Abdrehtülle 7 hin verläuft.

Die konische Außenfläche 22 setzt sich bis in die Durchgangsbohrung 23 in der Gewindehülse 14 fort und geht dann zunächst in einer quer zur Achse A-A verlaufenden Stirnfläche 24 und dann nach hinten in einen Innenkonus 25 über, wobei zwischen der Abdrehtülle 7 und dem der Abdrehtülle nächstliegenden Punkt des Bremsrings 13 ein radialer Abstand r verbleibt, durch den eine auf die Abdrehtülle 7 aufgezogene Darmraupe hindurch, in der Figur nach links, abgezogen wird.

Der Bremsring 13 ist gegenüber der Gewindehülse 14 mit seiner konischen Außenfläche 22 lediglich im Bereich der abgerundeten Randkante 26 abgestützt. Die sich an die Randkante 26 anschließende innere Vorderseite 27 der Gewindehülse 14, die als Innenkonus ausgebildet ist und hat einen Öffnungswinkel $\gamma$, der größer als der Öffnungswinkel der konischen Außenfläche 22 des Bremsrings 13 ist, in dem gezeigten Beispiel 150°. Dadurch wird sichergestellt, daß der Bremsring lediglich im Bereich der Randkante 26 mit der Gewindehülse 14 in Berührung ist.

Zum Einstellen der Bremskraft, die bei einem Naturdarm beispielsweise 2 bis 10 N, bei eine Kollagendarm 5 bis 10 N und bei einem Kunstdarm zwischen 10 und 35 N betragen kann, kann nun die Andrückschraube 11 mehr oder weniger weit in die Gewindehülse 14 eingeschraubt werden. Durch die dabei auf den Bremsring über die Anpreßflächen übertragene Kraft wird dieser mehr oder weniger weit unter Abstützung an der Randkante 26 gegen die Abdrehtülle 7 gedrückt, wobei sich unterschiedliche Radialabstände r einstellen lassen. Die in Richtung der konischen Außenfläche 22 auf den Bremsring eingeleitete Kraft bewirkt, daß dieser zum einen an der Randkante 26 beim Verstellen entlanggleitet, andererseits sich aber auch etwas durchbiegt. Aufgrund des relativ großen Abstandes zwischen der Randkante 26 und der Stelle, an der die Kraft in den Bremsring eingeleitet wird, d.h. an den Anpreßflächen 27, wird eine Hebelwirkung ausgeübt, die dazu führt, daß sich der Bremsring mit einer auf die Abdrehtülle weisenden Biegung leicht verformt. Dies kann sowohl mit einem wie in dem Beispiel dargestellt einstückig aus einem Gummimaterial hergestellten Bremsring erreicht werden, als auch mit einem Bremsring aus festem beispielsweise Blechmaterial, dessen konische Außenfläche 22 dann von einem geschlitzten Blechmantel gebildet wird, der in der Art einer Zange beim Einschrauben der Andrückschraube 11 auf die Abdrehtülle hin vorgespannt würde.

Am Außenumfang der Andrückschraube 11 ist eine auf die Innenfläche 28 des rückwärtigen Bereichs 16 offene Ringnut 29 ausgebildet, in der ein O-Ring 30 liegt. Der O-Ring sorgt für eine sichere Selbsthemmung des Gewindes auch bei kleinen Reaktionskräften, wie sie sich bei kleinen Bremskräften einstellen. Beim Einstellen der gewünschten Bremskraft bei der erfindungsgemäßen Lösung müssen lediglich die Reibkräfte am Gewinde, zwischen dem O-Ring und dem rückwärtigen Bereich 16 der Gewindehülse 14 sowie dem Bremsring 13 und der Randkante 26 überwunden werden. Da insbesondere der Bremsring 13 nur über eine sehr kleine Wirkfläche, nämlich der Randkante 26, mit der Gewindehülse zusammenwirkt, ergeben sich für das Verstellen der Andrückschraube insgesamt relativ kleine Verstellmomente, z.B. von 0,3 bis 0,4 Nm. Desweiteren ist der Anstieg der Bremskraft auf den Darm über den Verstellweg der Andrückschraube stark vermindert. Insbesondere ist der plötzlich starke Anstieg der Bremskraft gegen Ende des Verstellweges, wie er bei einer Darmbremse nach dem Stand der Technik zu beobachten war, unterbunden. Somit können die Bremskräfte sicher und sehr fein eingestellt werden.

Aufgrund der nur punktuellen Abstützung über die Randkante 26 führen auch Schwankungen im Darm nur zu geringen Kraftschwankungen, was zu wesentlich weniger Darmplatzer und damit weniger Ausschuß bei der Herstellung von Würsten mit einer solchen Maschine führt.

Durch die beschriebene Krafteinleitung auf den Bremsring lassen sich außerdem große Darmbremskräfte sicherstellen.

**Patentansprüche**

1. Abdrehvorrichtung für eine Maschine zum Füllen und Abdrehen von Würsten mit einer Darmbremse (10), die am freien Ende der Abdrehtülle (7) angeordnet und beim Abdrehen im Drehsinn der Abdrehtülle (7) angetrieben wird, mit einem konzentrisch zur Abdrehtülle (7) angeordneten Bremsring (13), einer mit einer Durchgangsbohrung (23) versehenen Gewindehülse (14) und einer Andrückschraube (11), wobei der Bremsring (13) elastisch ist, eine konische Außenfläche (22) und eine hintere Anpreßfläche (21) aufweist und in der Gewindehülse (14) angeordnet ist und wobei die Andrückschraube (11) in die Gewindehülse (14) einschraubbar ist und eine vordere Anpreßfläche (20) aufweist, mit der sie auf die hintere Anpreßfläche (21) des Bremsrings (13) wirkt und diesen dadurch mit seiner konischen Außenfläche (22) gegen einen auf der inneren Vorderseite der Gewindehülse (14) ausgebildeten Anschlag (26) derart beaufschlagt, daß dieser einen bestimmten Radialabstand (r) zur Abdrehtülle (7) einnimmt, dadurch **gekennzeichnet**, daß der Öffnungswinkel (β) der konischen Außenfläche (22) des Bremsrings (13) kleiner als der Öffnungswinkel (γ) der inneren Vorderseite (27) der Gewindehülse (14) ist, so daß der Anschlag allein von dem die Durchgangsbohrung (23) der Gewindehülse (14) begrenzenden Randkante (26) gebildet wird und daß die hintere Anpreßfläche (21) des Bremsrings (13) und die vordere Anpreßfläche (20) der Andrückschraube (11) von Konusflächen gebildet werden, die derart gerichtet sind, (Winkel α) daß die Kraftübertragungsrichtung im wesentlichen in Verlaufsrichtung der konischen Außenfläche (22) des Bremsringes (13) weist.

2. Abdrehvorrichtung nach Anspruch 1, dadurch **gekennzeichnet**, daß die Konusflächen (20, 21) unter Bildung eines Winkels (α) von 90° zu der konischen Außenfläche (22) des Bremsrings (13) verlaufen.

3. Abdrehvorrichtung nach Anspruch 1 oder 2, dadurch **gekennzeichnet**, daß die Länge der Konusfläche (21) des Bremsrings (13) kleiner als die Länge der Konusfläche (20) der Andrückschraube (11) ist.

4. Abdrehvorrichtung nach wenigstens einem der vorangegangenen Ansprüche, dadurch **gekennzeichnet**, daß die Randkante (26) der Durchgangsöffnung (12) nach innen hin abgerundet ist.

5. Abdrehvorrichtung nach wenigstens einem der vorangegangenen Ansprüche, dadurch **gekennzeichnet**, daß an der axial gerichteten Außenfläche der Andrückschraube (11) eine umlaufende Ringnut (29) ausgebildet ist, in der ein mit der axial verlaufenden Innenfläche (28) im rückwärtigen Bereich (16) der Gewindehülse (14) zusammenwirkender O-Ring (30) aufgenommen ist.

6. Abdrehvorrichtung nach wenigstens einem der vorangegangenen Ansprüche, dadurch **gekennzeichnet**, daß der Öffnungswinkel (β) der konischen Außenfläche (22) des Bremsrings (13) ca. 100° beträgt.

7. Abdrehvorrichtung nach wenigstens einem der vorangegangenen Ansprüche, dadurch **gekennzeichnet**, daß die innere Vorderseite (27) eine Innenkonusfläche ist.

8. Abdrehvorrichtung nach Anspruch 7, dadurch **gekennzeichnet**, daß der Öffnungswinkel (γ) der Innenkonusfläche (27) ca. 150° beträgt.

9. Abdrehvorrichtung nach wenigstens einem der vorangegangenen Ansprüche,
dadurch **gekennzeichnet**,
daß der Bremsring (13) auf der Seite des großen Durchmessers der konischen Außenfläche (22) als fester Ring, insbesondere als Blechring, ausgebildet ist und daß die konische Außenfläche von einem Blechmantel mit zur Spitze hin laufenden Schlitzen gebildet wird.

10. Abdrehvorrichtung nach Anspruch 9,
dadurch **gekennzeichnet**,
daß im Bereich der Kanten des Bremsrings (13) die zur Abdrehtülle weisen, eine Gummiummantelung, angeordnet ist.

**Revendications**

1. Dispositif à diviser et à ligaturer pour une machine à remplir et à ligaturer des saucisses, comprenant un organe de freinage pour boyaux (10) monté à l'extrémité libre de la douille à diviser et à ligaturer (7) et entraîné lors de la ligature dans le sens de rotation de la douille à ligaturer (7), une bague de freinage (13) disposée concentriquement par rapport à la douille à ligaturer (7), une douille filetée (14) munie d'un alésage de passage (23) et une vis de pression (11), la bague de freinage (13) étant élastique, présentant une surface extérieure conique (22) et une surface de pression postérieure (21) et étant placée dans la douille filetée (14), et la vis de pression (11) pouvant être vissée dans la douille filetée (14) et présentant une surface de pression antérieure (20) par laquelle elle agit sur la surface de pression postérieure (21) de la bague de freinage (13) qui est ainsi appliquée avec sa surface extérieure conique (22) contre une butée (26) conformée sur la face avant intérieure de la douille filetée (14) de telle façon que ladite bague de freinage (13) se place à une distance radiale (r) déterminée de la douille à diviser et à ligaturer (7), caractérisé en ce que l'angle d'ouverture (β) de la surface extérieure conique (22) de la bague de freinage (13) est plus petit que l'angle d'ouverture (γ) de la face avant intérieure (27) de la douille filetée (14) de telle façon que la butée est formée uniquement par le bord (26) délimitant l'alésage de passage (23) de la douille filetée (14), et que la surface de pression postérieure (21) de la bague de freinage (13) et la surface de pression antérieure (20) de la vis de pression (11) sont constituées par des surfaces coniques qui sont orientées de telle façon (angle α) que la direction de la transmission de force coïncide sensiblement avec la direction de l'extension de la surface extérieure conique (22) de la bague de freinage (13).

2. Dispositif à diviser et à ligaturer selon la revendication 1, caractérisé en ce que les surfaces coniques (20, 21) sont orientées de façon à former avec la surface extérieure conique (22) de la bague de freinage (13) un angle (α) de 90°.

3. Dispositif à diviser et à ligaturer selon l'une des revendications 1 ou 2, caractérisé en ce que la longueur de la surface conique (21) de la bague de freinage (13) est inférieure à la longueur de la surface conique (20) de la vis de pression (11).

4. Dispositif à diviser et à ligaturer selon l'une des revendications précédentes, caractérisé en ce que le bord (26) de l'ouverture de passage (12) est arrondie vers l'intérieur.

5. Dispositif à diviser et à ligaturer selon l'une des revendications précédentes, caractérisé en ce que sur la surface extérieure de la vis de pression (11) orientée dans le sens axial est conformée une rainure annulaire continue (29) dans laquelle est logé un joint torique d'étanchéité (30) qui coopère avec la surface intérieure (28) s'étendant dans le sens axial dans la partie postérieure (16) de la douille filetée (14).

6. Dispositif à diviser et à ligaturer selon l'une des revendications précédentes, caractérisé en ce que l'angle d'ouverture (β) de la surface extérieure conique (22) de la bague de freinage (13) est d'environ 100°.

7. Dispositif à diviser et à ligaturer selon l'une des revendications précédentes, caractérisé en ce que la face avant intérieure (27) est une surface intérieure conique.

8. Dispositif à diviser et à ligaturer selon la revendication 7, caractérisé en ce que l'angle d'ouverture (γ) de la surface intérieure conique (27) est d'environ 150°.

9. Dispositif à diviser et à ligaturer selon l'une des revendications précédentes, caractérisé en ce que la bague de freinage (13) est conformée, du côté du grand diamètre de la surface extérieure conique (22), en tant que bague solide, en particulier en tant que bague en tôle, et que la surface extérieure conique est constituée par une enveloppe en tôle avec des fentes dirigées vers la pointe.

10. Dispositif à diviser et à ligaturer selon la revendication 9, caractérisé en ce qu'une gaine en caoutchouc est disposée dans la région des arêtes de la bague de freinage (13) dirigées vers la douille à diviser et à ligaturer.

**Claims**

1. Twist-off device for a machine for the filling and twisting off of sausages, with a casing brake (10) which is arranged at the free end of the twist-off nozzle (7) and which, during twisting off, is driven in the direction of rotation of the twist-off nozzle (7), with a brake ring (13) arranged concentrically relative to the twist-off nozzle (7), with a threaded sleeve (14) having a passage bore (23) and with a pressure screw (11), the brake ring (13) being elastic, having a conical outer face (22) and a rear press-against face (21) and being arranged in the threaded sleeve (14), and the pressure screw (11) being screwable into the threaded sleeve (14) and having a front press-against face (20), by means of which it acts on the rear press-against face (21) of the brake ring (13) and thereby forces the latter with its conical outer face (22) up against a stop (26) formed on the inner front side of the threaded sleeve (14), in such a way that the brake ring (13) assumes a specific radial distance (r) from the twist-off nozzle (7), characterized in that the aperture angle (β) of the conical outer face (22) of the brake ring (13) is smaller than the aperture angle (γ) of the inner front side (27) of the threaded sleeve (14), so that the stop is formed solely by the marginal edge (26) limiting the passage bore (23) of the threaded sleeve (14), and in that the rear press-against face (21) of the brake ring (13) and the front press-against face (20) of the pressure screw (11) are formed by cone faces which are so directed (angle α) that the direction of force transmission points essentially in the path direction of the conical outer face (22) of the brake ring (13).

2. Twist-off device according to Claim 1, characterized in that the cone faces (20, 21) extend so as to form an angle (α) of 90° relative to the conical outer face (22) of the brake ring (13).

3. Twist-off device according to Claim 1 or 2, characterized in that the length of the cone face (21) of the brake ring (13) is smaller than the length of the cone face (20) of the pressure screw (11).

4. Twist-off device according to at least one of the preceding claims, characterized in that the marginal edge (26) of the passage orifice (12) is rounded inwards.

5. Twist-off device according to at least one of the preceding claims, characterized in that formed on the axially directed outer face of the pressure screw (11) is a continuous annular groove (29), in which is received an O-ring (30) interacting with the axially extending inner face (28) in the rearward region (16) of the threaded sleeve (14).

6. Twist-off device according to at least one of the preceding claims, characterized in that the aperture angle (β) of the conical outer face (22) of the brake ring (13) amounts to approximately 100°.

7. Twist-off device according to at least one of the preceding claims, characterized in that the inner front side (27) is an inner-cone face.

8. Twist-off device according to Claim 7, characterized in that the aperture angle (γ) of the inner-cone face (27) amounts to approximately 150°.

9. Twist-off device according to at least one of the preceding claims, characterized in that the brake ring (13), on the same side as the large diameter of the conical outer face (22), is designed as a solid ring, especially as a sheet-metal ring, and in that the conical outer face is formed by a sheet-metal shell with slots tapering to a point.

10. Twist-off device according to Claim 9, characterized in that a rubber sheathing is arranged in the region of those edges of the brake ring (13) which point towards the twist-off nozzle.

FIG. 1

EP 0 247 462 B1

FIG. 2